(19) Europäisches Patentamt / European Patent Office / Office européen des brevets

(11) **EP 4 023 726 A1**

(12) **EUROPEAN PATENT APPLICATION**
published in accordance with Art. 153(4) EPC

(43) Date of publication:
**06.07.2022 Bulletin 2022/27**

(51) International Patent Classification (IPC):
***C09D 109/06*** (2006.01)   ***C09D 123/26*** (2006.01)
***C09D 125/02*** (2006.01)   ***C09D 169/00*** (2006.01)

(21) Application number: **20857698.3**

(52) Cooperative Patent Classification (CPC):
**C09D 109/06; C09D 123/26; C09D 125/02; C09D 169/00**

(22) Date of filing: **24.08.2020**

(86) International application number:
**PCT/JP2020/031889**

(87) International publication number:
**WO 2021/039741 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2019 JP 2019154139**

(71) Applicant: **Techno-UMG Co., Ltd.**
**Tokyo 105-0021 (JP)**

(72) Inventors:
• **OMATA Yuuki**
  **Tokyo 105-0021 (JP)**
• **EGAWA Kazuya**
  **Tokyo 105-0021 (JP)**
• **ANDO Hiroki**
  **Tokyo 105-0021 (JP)**

(74) Representative: **TBK**
**Bavariaring 4-6**
**80336 München (DE)**

(54) **COATING RESIN COMPOSITION, AND MOLDED PRODUCT**

(57)    The coating resin composition contains a thermoplastic resin including (A) a rubber-reinforced vinyl-based resin having a rubbery portion derived from a rubbery polymer and a resin portion having a structural unit derived from an aromatic vinyl compound and (B) an olefin-based resin modified with a polar functional group containing an oxygen atom. The composition may further contain a polycarbonate resin.

**Description**

TECHNICAL FIELD

The present invention relates to a coating resin composition suitable for production of a molded article as a base-side molded article leading to a coated molded product having a good appearance after coating on a surface of the molded article.

BACKGROUND ART

Conventionally, molded articles made of a thermoplastic resin composition containing a rubber-reinforced vinyl-based resin such as an ABS resin have been used in a wide range of fields including vehicles, home electric appliances, and building materials because of excellent impact resistance and the like.

In the field of vehicles, for example, a spoiler which is an automobile component is manufactured by applying coating to a surface of a resin molded article. A resin molded article (molded product to be coated) having a streamline-shaped portion formed in a spoiler may have a residual strain, and when coating is performed on the resin molded article, a defective phenomenon called "cracking" or "foaming" may occur on a coated surface. The "cracking" is a phenomenon in which, after application of coating to a resin molded article, a solvent of a coating material penetrates into a portion having a residual strain of the molded article from the surface, the resin is deteriorated, and a crack occurs, and the "foaming" is a phenomenon in which a coating film is cured before volatiles of the solvent are released from an inside of the crack during drying of the coating film, and air bubble marks remain. When coating is applied to a resin molded article having a residual strain for the purpose of suppressing "cracking" and "foaming", the resin molded article is sometimes subjected to a heat treatment or a surface treatment in advance, but the treatment is not economical, and thus improvement of a molding material has been actively studied.

Techniques of Patent Literatures 1 and 2 are known as a resin composition suitable for coating a molded article containing a rubber-reinforced vinyl-based resin.

Patent Literature 1 discloses a thermoplastic resin composition to be coated, containing [A] a rubber-reinforced resin including a copolymer resin (A1) obtained by polymerizing at least two kinds of monomers (b) selected from the group consisting of an aromatic vinyl compound, a cyanidated vinyl compound, a (meth)acrylic acid ester, an acid anhydride-based monomer and a maleimide-based compound in the presence of a rubbery polymer (a), or a blend of the copolymer resin (A1) and a (co)polymer resin (A2) obtained by polymerizing at least one kind selected from the group of the monomers (b), and [B] a mixture containing at least two copolymers of ethylene, a (meth)acrylic acid ester and a carbon monoxide having different melt flow rate values, wherein a content of the mixture [B] is in a range from 3 to 70 parts by weight based on 100 parts by weight of an amount of the rubber-reinforced resin [A].

Patent Literature 2 discloses a coating thermoplastic resin composition, containing (A) a polyamide resin, (B) a styrene-based resin, and (C) an olefin-based resin, wherein a molded article obtained from the resin composition has a coating film adhesivity such that a number of peeled lattice cells of a coating film is 10 or less in a crosscut test using 100 lattice cells of 1 mm × 1 mm, and wherein a coated molded product has a breaking strength of 350 J/m or higher.

Patent Literature 3 discloses a coating resin composition consisting of 84.9 to 98.9 parts by mass of [A] a rubber-reinforced vinyl-based resin, 1 to 8 parts by mass of [B] a polyester resin, and 0.1 to 7.1 parts by mass of [C] an ethylene (meth)acrylic acid ester carbon monoxide copolymer based on 100 parts by mass of a total of [A], [B] and [C].

Patent Literature 4 discloses an aromatic polycarbonate resin molded article obtained by injection-molding an aromatic polycarbonate resin composition containing (A) an aromatic polycarbonate resin, (B-1) a rubbery polymer/aromatic vinyl compound/cyanidated vinyl compound-based copolymer, and (C) a polyolefin-based resin as resin components under conditions of an injection rate of 10 to 100 $cm^3$/s and a plane propagation coefficient of 40 to 200 $cm^3$/(s•cm).

Patent Literature 5 discloses a coating resin composition containing (A) a rubber-reinforced vinyl-based resin including a rubbery portion derived from an ethylene $\alpha$-olefin-based rubbery polymer and a resin portion including a structural unit derived from an aromatic vinyl compound, (B) a polyolefin resin, and (C) a polycarbonate resin, wherein content proportions of the rubber-reinforced vinyl-based resin (A), the polyolefin resin (B), and the polycarbonate resin (C) are respectively 3% to 40% by mass, 1% to 20% by mass, and 40% to 91% by mass based on 100% by mass of a total amount of these components.

PRIOR ART LITERATURE

PATENT LITERATURE

Patent Literature 1: JP-A 2003-327779
Patent Literature 2: JP-A 2007-327011
Patent Literature 3: JP-A2011-256366
Patent Literature 4: JP-A 2014-184720
Patent Literature 5: JP-A2019-19238

SUMMARY OF INVENTION

TECHNICAL PROBLEMS

An object of the present invention is to provide a coating resin composition leading to a molded article to be coated that leads to a coated molded product which is suppressed in defects such as peeling of a coating film and is excellent in appearance, and to provide a coating resin composition suitable for production of a base-side molded article that leads to a coated molded product which is suppressed in coating defects such as cracking and foaming even when coating is performed on a molded article (base-side molded article) after the molded article is produced by, for example, an injection molding method that tends to generate a residual strain, and which has a good appearance. Another object of the present invention is to provide a coating resin composition that leads to a molded article to be coated which is excellent in impact resistance and heat resistance.

SOLUTIONS TO PROBLEMS

The present invention is as follows.

1. A coating resin composition comprising a thermoplastic resin, the thermoplastic resin comprising (A) a rubber-reinforced vinyl-based resin having a rubbery portion derived from a rubbery polymer and a resin portion having a structural unit derived from an aromatic vinyl compound and (B) an olefin-based resin modified with a polar functional group containing an oxygen atom.
2. The coating resin composition according to clause 1 above, wherein a content ratio of the component (B) is in a range from 0.1% to 15% by mass based on 100% by mass of a total amount of the thermoplastic resin.
3. The coating resin composition according to clause 1 or 2 above, wherein the polar functional group contained in the component (B) is an acid anhydride group.
4. The coating resin composition according to any one of clauses 1 to 3 above, wherein the rubbery polymer used in formation of the component (A) comprises a diene-based rubbery polymer.
5. The coating resin composition according to any one of clause 1 to 4 above, wherein the thermoplastic resin further comprises an aromatic vinyl-based copolymer (provided that the component (A) is excluded), the aromatic vinyl-based copolymer having a structural unit derived from an aromatic vinyl compound.
6. The coating resin composition according to any one of clauses 1 to 5 above, wherein the thermoplastic resin further comprises a polycarbonate resin.
7. A molded article comprising the coating resin composition according to any one of clauses 1 to 6 above.
8. The molded article according to clause 7, wherein the molded article includes automotive parts.

ADVANTAGEOUS EFFECTS OF INVENTION

The coating resin composition of the present invention makes it possible to produce a molded article leading to a coated molded product which is excellent in appearance, and is suppressed in defects such as peeling of a coating film. In addition, the coating resin composition is suitable for production of a base-side molded article that leads to a coated molded product having a good appearance which has a coating film excellent in adhesion and is suppressed in coating defects (such as cracking and foaming) even when coating is performed on a molded article (base-side molded article) after the molded article is produced by, for example, an injection molding method that tends to generate a residual strain.
Further, according to the coating resin composition of the present invention, a molded article to be coated, which is excellent in impact resistance and heat resistance can be produced.

BRIEF DESCRIPTION OF DRAWINGS

Fig. 1 shows a test piece used for a peeling test in "EXAMPLES", wherein (1) is a bottom view, and (2) is a cross-sectional view taken along line X-X in (1).

Fig. 2 is a perspective view of a test piece used for a coating test in "EXAMPLES".

Fig. 3 is (1) a plan view, (2) a side view, and (3) a cross-sectional view taken along line Y-Y of the test piece in Fig. 2.

Fig. 4 is a view for explaining a crack formed in a coating film of a coated test piece obtained in a coating test in "EXAMPLES".

DESCRIPTION OF EMBODIMENT

Hereinafter, the present invention will be described in detail. In this specification, "(meth)acryl" means acryl and methacryl, "(meth)acrylate" means acrylate and methacrylate, "(meth)acryloyl group" means acryloyl group and methacryloyl group, "(meth)allyl group" means allyl group and methallyl group, and "(co)polymer" means a homopolymer and a copolymer.

The coating resin composition of the present invention is a thermoplastic resin composition including a thermoplastic resin (hereinafter, also referred to as "thermoplastic resin (X)") that contains the following components (A) and (B) as essential components:

(A) a rubber-reinforced vinyl-based resin having a rubbery portion derived from a rubbery polymer (hereinafter, also referred to as "rubbery portion (a1)") and a resin portion having a structural unit derived from an aromatic vinyl compound (hereinafter, also referred to as "resin portion (a2)"); and

(B) an olefin-based resin modified with a polar functional group containing an oxygen atom.

The thermoplastic resin (X) may be consisting of the components (A) and (B), and, if necessary, may further include other thermoplastic resins (which will be described later). The coating resin composition of the present invention may include additives (which will be described later).

The component (A) is preferably a graft resin in which the rubbery portion (a1) and the resin portion (a2) are chemically bonded. Hereinafter, this graft resin will be described in detail.

The rubbery polymer that forms the rubbery portion (a1) may be a homopolymer or a copolymer so long as it is rubbery (has rubber elasticity) at a temperature of 25°C. As the rubbery polymer, either a diene-based polymer (hereinafter, referred to as "diene-based rubbery polymer") or a non-diene-based polymer (hereinafter, referred to as a "non-diene-based rubbery polymer") may be used. The rubbery polymer may be a crosslinked polymer or a non-crosslinked polymer.

Examples of the diene-based rubbery polymer include a homopolymer such as polybutadiene, polyisoprene, and polychloroprene; a styrene butadiene-based copolymer rubber such as a styrene butadiene copolymer, a styrene butadiene styrene copolymer, an acrylonitrile butadiene copolymer, and an acrylonitrile styrene butadiene copolymer; a styrene isoprene-based copolymer rubber such as a styrene isoprene copolymer, a styrene isoprene styrene copolymer, and an acrylonitrile styrene isoprene copolymer. The copolymer may be a block copolymer or a random copolymer.

Examples of the non-diene-based rubbery polymer include an ethylene $\alpha$-olefin-based copolymer; a urethane-based rubber; an acrylic rubber; a silicone rubber; a silicone acrylic IPN rubber; a hydrogenated polymer obtained by hydrogenating (provided that a hydrogenation rate is 80% or more) a (co)polymer containing a structural unit derived from a conjugated diene-based compound; and the like. The copolymer may be a block copolymer or a random copolymer.

The non-diene-based rubbery polymer is preferably an ethylene $\alpha$-olefin-based copolymer, and the ethylene $\alpha$-olefin-based copolymer may be either a copolymer having a structural unit derived from ethylene and a structural unit derived from an $\alpha$-olefin, or a copolymer having a structural unit derived from ethylene, a structural unit derived from an $\alpha$-olefin, and a structural unit derived from other monomers.

Examples of the $\alpha$-olefin include propylene, 1-butene, 1-pentene, 1-hexene, 4-methyl-1-pentene, 1-heptene, 1-octene, 1-decene, 1-dodecene, 1-hexadecene, 1-eicosene, and the like. These $\alpha$-olefins may be used singly or in combination of two or more types thereof: The number of catbon atom for $\alpha$-olefin is preferably in a range from 3 to 20, more preferably from 3 to 12, and further preferably from 3 to 8.

Examples of the other monomers include a non-conjugated diene compound such as an alkenyl norbornene, a cyclic diene, and an aliphatic diene.

As the ethylene $\alpha$-olefin-based copolymer, a copolymer having a structural unit derived from ethylene, a structural unit derived from an $\alpha$-olefin, and a structural unit derived from other monomers is preferable, and a copolymer having a structural unit derived from ethylene, a structural unit derived from an $\alpha$-olefin, and a structural unit derived from an alkenyl norbornene such as 5-ethylidene-2-norbornene or a cyclic diene such as dicyclopentadiene is more preferable.

In the present invention, the component (A) preferably contains a rubber-reinforced vinyl-based resin (hereinafter, referred to as "rubber-reinforced vinyl-based resin (A1)") consisting of a rubbery portion (a1) derived from a diene-based rubbery polymer and a resin portion (a2) having a structural unit derived from an aromatic vinyl compound. Further, it is also a preferred embodiment that the component (A) contains a rubber-reinforced vinyl-based resin (hereinafter, referred to as "rubber-reinforced vinyl-based resin (A2)") consisting of a rubbery portion (a1) derived from an ethylene α-olefin-based rubbery polymer and a resin portion (a2) having a structural unit derived from an aromatic vinyl compound.

On the other hand, the resin portion (a2) constituting the component (A) contains a structural unit (hereinafter, referred to as "structural unit (u1)") derived from an aromatic vinyl compound. The aromatic vinyl compound is not particularly limited so long as it is a compound having at least one vinyl bond and at least one aromatic ring. However, the aromatic vinyl compound has no substituent such as a functional group. Examples of the aromatic vinyl compound include styrene, α-methylstyrene, o-methylstyrene, p-methylstyrene, β-methylstyrene, ethylstyrene, p-tert-butylstyrene, vinyltoluene, vinylxylene, vinylnaphthalene, and the like. Among these, styrene and α-methylstyrene are preferable.

Only one type of the structural unit (u1) may be contained in the resin portion (a2), or two or more types of the structural unit (u1) may be contained in it. The resin portion (a2) may consist of the structural unit (u1) and a structural unit (hereinafter, referred to as "structural unit (u2)") derived from a vinyl-based monomer other than the aromatic vinyl compound.

Examples of the other vinyl-based monomer which forms the structural unit (u2) include a cyanidated vinyl compound, a (meth)acrylic acid ester compound, a maleimide-based compound, a carboxy group-containing unsaturated compound, an unsaturated acid anhydride, an amino group-containing unsaturated compound, an amide group-containing unsaturated compound, a hydroxy group-containing unsaturated compound, an oxazoline group-containing unsaturated compound, and the like.

Examples of the cyanidated vinyl compound include acrylonitrile, methacrylonitrile, ethacrylonitrile, α-ethylacrylonitrile, α-isopropylacrylonitrile, and the like.

Examples of the (meth)acrylic acid ester compound include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, hexyl (meth)acrylate, n-octyl (meth)acrylate, 2-ethylhexyl (meth)acrylate, cyclohexyl (meth)acrylate, phenyl (meth)acrylate, benzyl (meth)acrylate, and the like.

Examples of the maleimide-based compound include maleimide, N-methyl maleimide, N-isopropyl maleimide, N-butyl maleimide, N-dodecyl maleimide, N-phenyl maleimide, N-(2-methylphenyl)maleimide, N-(4-methylphenyl)maleimide, N-(2,6-dimethylphenyl)maleimide, N-(2,6-diethylphenyl)maleimide, N-benzylmaleimide, N-cyclohexyl maleimide and the like. In a case of introducing a structural unit derived from a maleimide compound into a polymer chain, an imidization after copolymerization with maleic anhydride, for example, may be applied.

Examples of the unsaturated acid anhydride include maleic anhydride, itaconic anhydride, citraconic anhydride, 2,3-dimethyl maleic anhydride, and the like.

Examples of the carboxy group-containing unsaturated compound include (meth)acrylic acid, ethacrylic acid, maleic acid, fumaric acid, itaconic acid, crotonic acid, cinnamic acid, and the like.

Examples of the amino group-containing unsaturated compound include aminoethyl acrylate, propylaminoethyl acrylate, dimethylaminomethyl acrylate, diethyaminomethyl acrylate, 2-dimethylaminoethyl acrylate, aminoethyl methacrylate, propylaminoethyl methacrylate, dimethylaminomethyl methacrylate, diethyaminomethyl methacrylate, 2-dimethylaminoethyl methacrylate, phenylaminoethyl methacrylate, p-aminostyrene, N-vinyldiethylamine, N-acetylvinylamine, acrylamine, methacrylamine, N-methyl acrylamine, and the like.

Examples of the amide group-containing unsaturated compound include acrylamide, N-methyl acrylamide, methacrylamide, N-methyl methacrylamide, and the like.

Examples of the hydroxy group-containing unsaturated compound include a (meth)acrylic acid ester having a hydroxy group such as hydroxymethyl (meth)acrylate, 2-hidroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, and polypropylene glycol mono(meth)acrylate; o-hydroxystyrene, m-hydroxystyrene, p-hydroxystyrene, o-hydroxy-α-methylstyrene, m-hydroxy-α-methylstyrene, p-hydroxy-α-methylstyrene, 2-hydroxymethyl-α-methylstyrene, 3-hydroxymethyl-α-methylstyrene, 4-hydroxymethyl-α-methylstyrene, 4-hydroxymethyl-1-vinylnaptharene, 7-hydroxymethyl-1-vinylnaptharene, 8-hydroxymethyl-1-vinylnaptharene, 4-hydroxymethyl-1-isopropenylnaptharene, 7-hydroxymethyl-1-isopropenylnaptharene, 8-hydroxymethyl-1-isopropenylnaptharene, p-vinylbenzyl alcohol, 3-hydroxy-1-propene, 4-hydroxy-1-butene, cis-4-hydroxy-2-butene, trans-4-hydroxy-2-butene, 3-hydroxy-2-methyl-1-propene, and the like.

Examples of the epoxy group-containing unsaturated compound include glycidyl (meth)acrylate, 3,4-oxycyclohexyl (meth)acrylate, vinylglycidylether, allyl glycidylether, methallyl glycidylether, monoglycidyl maleate, diglycidyl maleate, monoglycidyl itaconate, diglycidyl itaconate, monoglycidyl allylsuccinate, diglycidyl allylsuccinate, glycidyl p-styrenecarboxylate, 2-methylpropenyl glycidyl ether, styrene-glycidyl ether, and the like.

Examples of the oxazoline group-containing unsaturated compound include vinyl oxazoline, 4-methyl-2-vinyl-2-oxazoline, 5-methyl-2-vinyl-2-oxazoline, 2-vinyl-4,4-dimethyl-2-oxazoline, 2-isopropenyl-2-oxazoline, 4-methyl-2-isopropenyl-2-oxazoline, 5-methyl-2-isopropenyl-2-oxazoline, 2-isopropenyl-4,4-dimerthyl-2-oxazoline, and the like.

When the resin portion (a2) includes the structural unit (u2), the structural unit (u2) may be included singly or in combination of two or more types thereof:

The structural unit (u2) preferably includes a structural unit derived from a cyanidated vinyl compound from viewpoints of appearance, mechanical strength, and chemical resistance of the molded article to be coated.

When the resin portion (a2) includes the structural unit (u2), content proportions of the structural unit (u1) and the structural unit (u2) are respectively, preferably 40% to 90% by mass and 10% to 60% by mass, more preferably 50% to 85% by mass and 15% to 50% by mass, and further preferably 60% to 80% by mass and 20% to 40% by mass, based on 100% by mass of a total amount of the structural units.

When the component (A) is a graft resin, a graft rate is preferably 20% or higher, more preferably 30% or higher, and further preferably in a range from 35% to 65%, from viewpoints of the appearance and mechanical strength of the molded article to be coated.

The graft rate can be determined by the following formula.

$$\text{Graft rate } (\%) = \{(S\text{-}T)/T\} \times 100$$

In the formula, S is a mass (g) of an insoluble component obtained by charging 1 g of the component (A) into 20 ml of acetone, shaking the mixture with a shaker for 2 hours, centrifuging the mixture, and separating the insoluble component and the soluble component, and T is a mass (g) of the rubbery portion (a1) derived from the rubbery polymer contained in 1 g of the component (A). The mass of the rubbery portion (a1) can be obtained by a method of calculation from a polymerization formulation and a polymerization conversion rate, a method of determination by an infrared absorption spectrum (IR), or the like.

The component (A) may be contained singly or in combination of two or more types thereof in the thermoplastic resin (X).

The component (A) may be, for example, a combination of two or more types of the rubber-reinforced vinyl-based resin (A1), a combination of two or more types of the rubber-reinforced vinyl-based resin (A2), or a combination of the rubber-reinforced vinyl-based resins (A1) and (A2).

When the component (A) consists of the rubber-reinforced vinyl-based resins (A1) and (A2), the proportions thereof are respectively preferably 20% to 60% by mass and 40% to 80% by mass, and more preferably 30% to 50% by mass and 50% to 70% by mass, based on 100% by mass of a total amount of the rubber-reinforced vinyl-based resins, from a viewpoint of coatability.

When the component (A) is a graft resin, the graft resin can be produced by emulsion polymerization, suspension polymerization, solution polymerization, or bulk polymerization of a monomer component containing an aromatic vinyl compound in the presence of the rubbery polymer. The reaction product formed by this method usually includes a graft resin that is the component (A) and a resin in which the rubbery portion and the resin portion are not chemically bonded. The latter resin is a component (D) which will be described later, and, when the reaction product is used as a raw material for production, the resulting coating resin composition contains the components (A) and (D).

The component (B) is an olefin-based resin mainly that includes a structural unit derived from olefin (hereinafter, referred to as "structural unit (v1)") and is modified with a polar functional group containing an oxygen atom (hereinafter, referred to as an "oxygen atom-containing polar functional group"). Examples of the oxygen atom-containing polar functional group include a hydroxy group, a carboxy group, an acid anhydride group, an ester group, an epoxy group, an amide group, a nitro group, an oxazoline group, a sulfonic acid group, a sulfonamide group, a phosphoric acid group, and the like. Types and total number of oxygen atom-containing polar functional groups of the component (B) are not particularly limited. The oxygen atom-containing polar functional group preferably has an acid anhydride group. The component (B) may further have a functional group containing no oxygen atom.

Examples of the component (B) include a copolymer (hereinafter, referred to as "modified resin (B1)") having a structural unit (v1) and a structural unit (hereinafter, referred to as "structural unit (v2)") derived from a monomer having an oxygen atom-containing polar functional group; a composite resin in which at least a part of a surface of a non-modified olefin resin is covered with a (co)polymer including the structural unit (v2). Among them, the modified resin (B1) is preferable.

Examples of the olefin that forms the structural unit (v1) contained in the modified resin (B1) include ethylene, propylene, 1-butene, 2-butene, isobutylene, 1-pentene, 2pentene, 2-methyl-1-butene, 3-methyl-1-butene, 2,3-dimethyl-2-butene, 1-butene, 1-hexene, 1-octene, 1-nonen, 1-decene, and the like.

The structural unit (v1) may be contained singly or in combination of two or more types thereof in the modified resin (B1). When the modified resin (B1) includes only one type of the structural unit (v1), the structural unit is preferably derived from propylene.

In addition, when the modified resin (B1) includes plural types of the structural unit (v1), examples of a combination of the structural units (v1) include ethylene and propylene; ethylene and 1-butene; ethylene and 4-methyl-1-pentene; ethylene and 1-hexene; propylene and 4-methyl-1-pentene; 1-butene and 4-methyl-1-pentene; 1-hexene and 4-methyl-1-pentene; ethylene and 1-octene; propylene and 1-butene; 4-methyl-1-pentene and 1-octene; and the like.

Examples of the monomer having the oxygen atom-containing polar functional group that forms the structural unit (v2) contained in the modified resin (B1) include the hydroxy group-containing unsaturated compound exemplified as a monomer leading to the structural unit (u2) that may be contained in the component (A); other carboxy group-containing unsaturated compounds (incomplete esterified products of unsaturated compounds having two or more carboxy groups, and the like); and the like. Among them, an unsaturated acid anhydride is preferable, and maleic anhydride is particularly preferable.

The structural unit (v2) may be contained singly or in combination of two or more types thereof in the modified resin (B1).

A content proportion of the structural unit (v2) contained in the modified resin (B1) is preferably in a range from 1% to 20% by mass, and more preferably from 5% to 15% by mass, from viewpoints of the dispersibility and coatability of the modified resin (B1) in the composition.

The modified resin (B1) is preferably a copolymer having a hydrophobic segment including the structural unit (v1) and a hydrophilic segment including the structural unit (v2).

The component (B) may be contained singly or in combination of two or more types thereof in the thermoplastic resin (X).

A content ratio of the component (B) contained in the thermoplastic resin (X) is preferably in a range from 0.1% to 15% by mass, more preferably from 0.2% to 12% by mass, further preferably from 0.3% to 9% by mass, furthermore preferably from 0.4% to 6% by mass, and particularly preferably from 0.5% to 3% by mass, based on 100% by mass of a total amount of the thermoplastic resin (X), from viewpoints of coatability and molding appearance (peel property).

As described above, the thermoplastic resin (X), which is the main component of the coating resin composition of the present invention, may include other thermoplastic resins. Examples of the other thermoplastic resin include a vinyl-based (co)polymer (excluding a non-modified polyolefin resin) which does not have a rubbery portion, is not contained in the component (A) and includes a structural unit derived from a vinyl-based monomer; a polycarbonate resin; a non-modified polyolefin resin; a modified polyolefin resin not contained in the component (B); a polyester resin; a polyamide resin; and the like. Among them, a polycarbonate resin (hereinafter, also referred to as "component (C)") and a vinyl-based (co)polymer (hereinafter, also referred to as "component (D)") are preferable.

When the thermoplastic resin (X) includes other thermoplastic resins, an upper limit of a content ratio of the other thermoplastic resins to the entire thermoplastic resin (X) is preferably 90% by mass, and more preferably 88% by mass.

The component (C) is not particularly limited so long as it is a polycarbonate resin having a carbonate bond in the main chain. It may be an aromatic polycarbonate or an aliphatic polycarbonate. It may be an aliphatic carbonate containing an aromatic ring. In the present invention, an aromatic polycarbonate is preferable from viewpoints of impact resistance, heat resistance, and the like before and after coating. The component (C) may be one whose terminate is modified with an R-CO-group or an R'-O-CO-group (R and R' each represent an organic group).

As the aromatic polycarbonate, one obtained by melting an aromatic dihydroxy compound and a carbonic acid diester to perform ester interchange (transesterification), one obtained by interfacial polymerization method using phosgene, one obtained by pyridine method using a reaction product of pyridine and phosgene, and the like may be used.

The aromatic dihydroxy compound may be one having two hydroxyl groups in the molecule. Example thereof includes dihydroxybenzene such as hydroquinone and resorcinol, 4,4'-biphenyl, 2,2-bis(4-hydroxyphenyl)propane (hereinafter, referred to as "bisphenol A" ), 2,2-bis(3,5-dibromo4-hydroxyphenyl) propane, 2,2-bis(4-hydroxyphenyl-3-methylphenyl) propane, 2,2-bis(3-tert-butyl-4-hydroxyphenyl) propane, 2,2-bis(3,5-dimethyl-4-hydroxyphenyl) propane, bis(4-hydroxyphenyl) methane, 1,1-bis(p-hydroxyphenyl) ethane, 2,2-bis(p-hydroxyphenyl) butane, 2,2-bis(p-hydroxyphenyl) pentane, 1,1-bis(p-hydroxyphenyl) cyclohexane, 1,1-bis(p-hydroxyphenyl)4-isopropylcyclohexane, 1,1-bis(p-hydroxyphenyl)-3,3,5-trimethylcyclohexane, 1,1-bis(p-hydroxyphenyl)-1-phenylethane, 9,9-bis(p-hydroxyphenyl) fluorene, 9,9-bis(p-hydroxy-3-methylphenyl) fluorene, 4,4'-(p-phenylenediisopropylidene) diphenol, 4,4'-(m-phenylenediisopropylidene) diphenol, bis(p-hydroxyphenyl) oxide, bis(p-hydroxyphenyl) ketone, bis(p-hydroxyphenyl) ether, bis(p-hydroxyphenyl) ester, bis(p-hydroxyphenyl) sulfide, bis(p-hydroxy-3-methylphenyl) sulfide, bis(p-hydroxyphenyl) sulfone, bis(3,5-dibromo4-hydroxyphenyl) sulfone, bis(p-hydroxyphenyl) sulfoxide, and the like. These may be used singly or in combination of two or more types thereof:

The aromatic dihydroxy compound is preferably a compound having a hydrocarbon group between two benzene rings. This hydrocarbon group in this compound may be a halogen-substituted hydrocarbon group. In addition, a hydrogen atom in the benzene ring may be replaced with a halogen atom. Therefore, examples of the above compound include bisphenol A, 2,2-bis(3,5-dibromo-4-hydroxyphenyl) propane, 2,2-bis(4-hydroxyphenyl-3-methylphenyl) propane, 2,2-bis(3-tert-butyl-4-hydroxyphenyl) propane, 2,2-bis(3,5-dimethyl-4-hydroxyphenyl) propane, bis(4-hydroxyphenyl) methane, 1,1-bis(p-hydroxyphenyl) ethane, 2,2-bis(p-hydroxyphenyl) butane, and the like. Among these, bisphenol A is particularly preferred.

Examples of the carbonic acid diester used for obtaining the aromatic polycarbonate by transesterification include dimethyl carbonate, diethyl carbonate, di-tert-butyl carbonate, diphenyl carbonate, ditolyl carbonate, and the like. These may be used singly or in combination of two or more types thereof.

An average molecular weight and molecular weight distribution of the component (C) are not particularly limited as long as the composition has molding processability. The molecular weight of the component (C) is preferably in a range from 10,000 to 50,000, more preferably from 15,000 to 30,000, and further preferably from 17,500 to 27,000 as a viscosity average molecular weight (Mv) converted from a solution viscosity measured at a temperature of 25°C using methylene chloride as a solvent.

A melt mass flow rate (hereinafter, also referred to as "MFR") of the component (C) in accordance with ISO 1133 is preferably in a range from 1 to 70 g/10 min, more preferably from 2.5 to 50 g/10 min, and further preferably from 4 to 30 g/10 min, under conditions of a temperature of 240°C and a load of 10 kg.

The component (C) may be contained singly or in combination of two or more types thereof in the thermoplastic resin (X).

When the thermoplastic resin (X) contains the component (C), a content ratio of the component (C) is preferably in a range from 400 to 700 parts by mass, and more preferably from 500 to 600 parts by mass based on 100 parts by mass of a content of the component (A). In the composition when the component (C) is contained in an amount of 400 parts or more by mass, a content ratio of the component (B) is preferably in a range from 5 to 110 parts by mass, and more preferably from 7 to 80 parts by mass based on 100 parts by mass of the component (A).

The component (D) is a copolymer including, for example, a structural unit derived from at least one compound selected from a group consisting of an aromatic vinyl compound, a cyanidated vinyl compound, a (meth)acrylic acid ester compound, a maleimide-based compound, an unsaturated acid anhydride, a carboxy group-containing unsaturated compound, an amino group-containing unsaturated compound, an amide group-containing unsaturated compound, a hydroxy group-containing unsaturated compound, an oxazoline group-containing unsaturated compound, a halogenated vinyl compound, and the like. In the present invention, the component (D) is preferably a copolymer having a structural unit derived from at least one compound selected from a group consisting of an aromatic vinyl compound, a cyanidated vinyl compound, a (meth)acrylic acid ester compound, a maleimide-based compound, an unsaturated acid anhydride, a carboxy group-containing unsaturated compound, an amino group-containing unsaturated compound, an amide group-containing unsaturated compound, a hydroxy group-containing unsaturated compound, and an oxazoline group-containing unsaturated compound, and more preferably a copolymer such as an acrylonitrile styrene copolymer, an acrylonitrile $\alpha$-methylstyrene copolymer, an acrylonitrile styrene $\alpha$-methylstyrene copolymer, an acrylonitrile styrene methyl methacrylate copolymer, an acrylonitrile $\alpha$-methylstyrene methyl methacrylate copolymer, an acrylonitrile styrene N-phenylmaleimide copolymer, a styrene methyl methacrylate copolymer, and a styrene N-phenylmaleimide copolymer. In the present invention, the component (D) is particularly preferably a copolymer (hereinafter, referred to as "aromatic vinyl-based copolymer (D1)") consisting of a structural unit derived from an aromatic vinyl compound and a structural unit derived from a cyanidated vinyl compound, a copolymer consisting of a structural unit derived from an aromatic vinyl compound and a structural unit derived from a maleimide-based compound, and a copolymer consisting of a structural unit derived from an aromatic vinyl compound, a structural unit derived from a cyanidated vinyl compound, and a structural unit derived from a maleimide-based compound.

A preferred configuration of the aromatic vinyl-based copolymer (D1) is shown below from a viewpoint of coatability. Content proportions of the structural unit derived from the aromatic vinyl compound and the structural unit derived from the cyanidated vinyl compound are respectively preferably 60% to 90% by mass and 10% to 40% by mass, more preferably 63% to 80% by mass and 20% to 37% by mass, further preferably 65% to 75% by mass and 25% to 35% by mass, and particularly 67% to 73% by mass and 27% to 33% by mass, based on 100% by mass of a total amount of the structural units.

The component (D) may be contained singly or in combination of two or more types thereof in the thermoplastic resin (X).

When the thermoplastic resin (X) contains the component (D), a content ratio of the component (D) is preferably in a range from 40 to 320 parts by mass, and more preferably from 100 to 320 parts by mass, based on 100 parts by mass of the component (A). In the composition when the component (D) is contained in an amount of 40 parts or more by mass, a content ratio of the component (B) is preferably in a range from 1 to 110 parts by mass, and more preferably from 2 to 80 parts by mass based on 100 parts by mass of a content of the component (A). When the thermoplastic resin (X) does not contain the component (C), a content ratio of the component (B) is preferably in a range from 1 to 55 parts by mass, and more preferably from 2 to 45 parts by mass based on 100 parts by mass of the component (A).

The non-modified polyolefin resin is preferably a non-modified (co)polymer including at least one of structural units derived from an $\alpha$-olefin having 2 or more carbon atoms. In the present invention, a particularly preferred non-modified polyolefin resin is a polyolefin resin consisting of at least one structural unit derived from an $\alpha$-olefin having 2 to 10 carbon atoms.

Examples of the $\alpha$-olefin include ethylene, propylene, butene-1, pentene-1, hexene-1, 3-methylbutene-1, 4-methylpenetene-1, 3-methylhexene-1, and the like. Among these, ethylene, propylene, butene-1, 3-methylbutene-1 and 4-methylpenetene-1are preferable, and propylene is particularly preferred.

Examples of the non-modified polyolefin resin include polyethylene, polypropylene, ethylene propylene copolymer, polybutene-1, ethylene butene-1 copolymer, and the like.

The non-modified polyolefin resin may be crystalline or amorphous. Preferably, it has a crystallinity of 20% or more by X-ray diffraction at room temperature.

The molecular weight of the non-modified polyolefin resin is not particularly limited. From viewpoints of the appearance and mechanical strength of the molded article to be coated, an MFR (temperature: 190°C, load: 2.16 kg) according to ISO 1133 is preferably in a range from 0.1 to 50 g/10 min, and more preferably from 0.5 to 30 g/min. Those having a molecular weight corresponding to each value are preferable.

The polyester resin is not particularly limited as long as it is a resin having an ester bond in the main chain of the molecule. The polyester resin is preferably a saturated polyester resin. The saturated polyester resin may be a homopolyester or a copolyester.

Examples of the homopolyester include a polyalkylene terephthalate such as polyethylene terephthalate (PET), polypropylene terephthalate (PPT), polybutylene terephthalate (PBT), polyhexamethylene terephthalate, polycyclohexane-1, 4-dimethyl terephthalate, and polyneopentyl terephthalate; polyethylene isophthalate; a polyalkylene naphthalate such as polyethylene naphthalate, polybutylene naphthalate, and polyhexamethylene naphthalate; and the like.

Examples of the copolyester include a copolyester mainly containing an alkylene terephthalate unit and/or an alkylene naphthalate unit; and the like.

In the present invention, a proportion of the rubbery portion (a1) constituting the component (A) to the thermoplastic resin (X) is preferably in a range from 1% to 50% by mass, more preferably from 3% to 40% by mass, further preferably from 5% to 30% by mass, and particularly from 7% to 21% by mass, from viewpoints of fluidity (molding processability) and impact resistance.

The coating resin composition of the present invention may, as described above, include additives. Examples of the additives include a filler, a plasticizer, an antioxidant, a ultraviolet absorber, an antiaging agent, a flame retardant, a stabilizer, a weathering agent, a light stabilizer, a heat stabilizer, an antistatic agent, a water repellent, an oil repellent, an antibacterial agent, an antiseptic agent, a colorant (pigments, dyes, etc), and the like. For example, there are ones having a massive shape, a fibrous (linear) shape, a scaly shape, or other shapes as the filler, but a composition containing a fibrous or scaly filler is one of preferred embodiments. Examples of the fibrous filler include wollastonite, glass fibers, milled fibers of glass fibers, carbon fibers, milled fibers of carbon fibers, zinc oxide whiskers, aluminum borate whiskers, potassium titanate whiskers, and the like. Examples of the scaly filler include glass flakes, mica, talc, and the like.

The coating resin composition of the present invention can be produced by kneading raw materials using various extruders, Banbury mixers, kneaders, rolls, feeder ruders, and the like. The coating resin composition may be formed into pellets or the like having a predetermined shape. A set temperature of the device used at the time of kneading is selected depending on the types, amounts, and the like of the raw materials, and is usually in a range from 180°C to 300°C. A method for using the raw materials is not particularly limited, and the respective components may be blended at once to conduct kneading, or may be separately blended in multiple stages to conduct kneading.

The molded article of the present invention is characterized by including a coating resin composition. The molded article of the present invention can be produced by subjecting the coating resin composition to a conventionally publicly known molding method such as an injection molding method, an injection compression molding method, a press molding method, an extrusion molding method, a coextrusion molding method, a sheet extrusion molding method, a profile extrusion molding method, a vacuum molding method, a blow molding method, a compression molding method, a cast molding method, and a roll molding method. The coating resin composition of the present invention has high productivity, and is suitable for an injection molding method that tends to generate a residual strain in the case of a large-sized molded article.

The molded article of the present invention is suppressed in defects such as peeling, and is excellent in shape stability and appearance thereof: Further, the molded article is excellent in impact resistance. The molded article has a thermal deformation temperature of 70°C or higher, and is excellent in heat resistance. The molded article of the present invention is used as a base-side molded article to be coated, and when coating is performed on a surface thereof, a coated molded product excellent in adhesion of a coating film and coating appearance can be obtained.

The method for forming a coating film on the molded article of the present invention is not particularly limited, and conventionally publicly known coating methods such as spray coating, electrostatic coating, powder coating, and electrodeposition coating can be applied. A coating material used in coating is not particularly limited, and may be either a liquid coating material or a powder coating material. It is preferably a liquid coating material, and is particularly preferably an oily coating material. Examples of a base resin include an acrylic resin, a phenol resin, an alkyd resin, an aminoalkyd resin, a vinyl chloride resin, a silicone resin, a fluororesin, an unsaturated polyester resin, an epoxy resin, a polyurethane resin, a melamine resin, an acrylic urethane resin, an acrylic melamine resin, a polyester melamine resin, and the like.

A thickness of the coating film in the obtained coated molded product depends on the type of coating material and the like, but is usually in a range from 10 to 100 $\mu$m from a viewpoint of coating appearance.

The coated molded product is excellent in adhesion of the coating film to the molded article of the present invention as a base material, has a good appearance, and is suppressed in coating defects such as cracking and foaming. Furthermore, even if water or a cleaning agent comes into contact with the coated molded product, the coating film will not be peeled off or deteriorated. Therefore, the coated molded product may be used in either a sealed environment or outdoors, and is particularly suitable as automotive parts (interior component or exterior component).

EXAMPLES

Hereinafter, the present invention will be described in detail using Examples, however, the present invention is in no way limited by these Examples without departing from the scope of the invention. In the following, "%" and "parts" are based on mass unless otherwise indicated.

1. Raw materials

Raw materials used in Examples and Comparative Examples are as follows. The graft rate was measured according to the method described above.

1-1. Rubber-reinforced vinyl-based resin

As raw material resins containing a rubber-reinforced vinyl-based resin, an ABS resin and an AES resin were used.

1-1-1. ABS resin (P-1)

In a flask, 54 parts in terms of solid content of a polybutadiene rubber latex (average particle diameter: 270 nm) and 6 parts in terms of solid content of a styrene butadiene-based copolymer rubber latex (content ratio of styrene unit: 25%, average particle diameter: 550 nm) were charged. Then, 150 parts of ion-exchanged water, 7 parts of styrene, 3 parts of acrylonitrile, and 0.2 part of t-dodecylmercaptan were further charged, and a temperature in the flask was raised to 60°C. A solution obtained by dissolving 0.2 part of sodium pyrophosphate, 0.01 part of ferrous sulfate heptahydrate, and 0.4 part of glucose in 20 parts of ion-exchanged water was then added thereto, and 0.1 part of cumene hydroperoxide was further added to initiate polymerization, and a warm bath temperature was kept at 70°C. After polymerization for 1 hour, 22 parts of styrene, 8 parts of acrylonitrile, 0.5 part of t-dodecyl mercaptan, and 0.2 part of cumene hydroperoxide were continuously added over 2 hours, and polymerization was further performed for 1 hour to complete the reaction. Sulfuric acid was added to the obtained copolymer latex, and the mixture was coagulated, washed with water, and dried to obtain a powdery resin composition. A graft rate of a diene-based rubber-reinforced vinyl-based resin contained in the obtained resin composition was 33%. An ungrafted acrylonitrile styrene copolymer (acetone soluble component) had a limiting viscosity $[\eta]$ (measured in methyl ethyl ketone at 30°C) of 0.21 dl/g.

1-1-2. ABS resin (P-2)

This is a resin composition obtained by emulsion polymerization of styrene and acrylonitrile in the presence of polybutadiene rubber having a gel fraction of 86% and an average particle diameter of 290 nm. A graft rate of a diene-based rubber-reinforced vinyl-based resin contained in this resin composition was 53%, a content of the polybutadiene rubber contained in the diene-based rubber-reinforced resin was 60%, an acrylonitrile unit content was 10%, and a styrene unit content was 30%. An ungrafted acrylonitrile styrene copolymer (acetone soluble component) contained 25% of an acrylonitrile unit and 75% of a styrene unit, and had a limiting viscosity $[\eta]$ (measured in methyl ethyl ketone at 30°C) of 0.37 dl/g.

1-1-3. AES resin (P-3)

This is a resin composition obtained by polymerization of styrene and acrylonitrile in the presence of an ethylene propylene dicyclopentadiene copolymer rubber having an ethylene unit content of 63%, a propylene unit content of 32%, a dicyclopentadiene unit content of 5% in a toluene solvent, and also having a Mooney viscosity ($ML_{1+4}$, 100°C) of 33. A graft rate of the ethylene $\alpha$-olefin-based rubber-reinforced vinyl-based resin contained in this resin composition was 60%, a content of the ethylene propylene dicyclopentadiene copolymer rubber contained in the ethylene $\alpha$-olefin-based rubber-reinforced resin was 30%, an acrylonitrile unit content was 24.5%, and a styrene unit content was 45.5%. An ungrafted acrylonitrile styrene copolymer (acetone soluble component) contained 35% of an acrylonitrile unit and 65% of a styrene unit, and had a limiting viscosity $[\eta]$ (measured in methyl ethyl ketone at 30°C) of 0.4 dl/g.

1-2. Vinyl-based polymer

1-2-1. Acrylonitrile styrene copolymer (Q-1)

This is an acrylonitrile styrene copolymer including 24% of an acrylonitrile unit and 76% of a styrene unit, and having a weight average molecular weight, in terms of polystyrene, of 142,000 as measured by GPC. The copolymer has a limiting viscosity $[\eta]$ (measured in methyl ethyl ketone at 30°C) of 0.058 dl/g.

1-2-2. Acrylonitrile styrene copolymer (Q-2)

This is an acrylonitrile styrene copolymer including 32% of an acrylonitrile unit and 68% of a styrene unit, and having a weight average molecular weight, in terms of polystyrene, of 71,200 as measured by GPC. The copolymer has a limiting viscosity $[\eta]$ (measured in methyl ethyl ketone at 30°C) of 0.041 dl/g.

1-2-3. Acrylonitrile styrene copolymer (Q-3)

This is an acrylonitrile styrene copolymer including 33% of an acrylonitrile unit and 67% of a styrene unit, and having a weight average molecular weight, in terms of polystyrene, of 116,000 as measured by GPC. The copolymer has a limiting viscosity $[\eta]$ (measured in methyl ethyl ketone at 30°C) of 0.053 dl/g.

1-24. Acrylonitrile $\alpha$-methylstyrene copolymer (Q-4)

This is an acrylonitrile $\alpha$-methylstyrene copolymer including 25% of an acrylonitrile unit and 75% of an $\alpha$-methylstyrene unit. The copolymer has a limiting viscosity $[\eta]$ (measured in methyl ethyl ketone at 30°C) of 0.40 dl/g.

1-3. Modified polyolefin-based resin (R-1)

Maleic anhydride-modified polypropylene "UMEX 1010" (product name) manufactured by Sanyo Chemical Industries, Ltd. was used as a raw material for the component (B). A melt viscosity at 160°C is 6,000 mPa•s, and an acid value according to JIS K 0070 is 52.

1-4. Polycarbonate resin (S-1)

As a raw material for the component (C), polycarbonate "NOVAREX 7022PJ" (product name) manufactured by Mitsubishi Engineering-Plastics Corporation was used. A viscosity average molecular weight (Mv) is 18,700 and an MFR (temperature: 240°C, load: 10 kg) is 7.7 g/10 min.

1-5. Ethylene acrylic acid ester carbon monoxide copolymer (T-1)

Ethylene acrylic acid ester carbon monoxide copolymer "Elvaloy HP 661" (product name) manufactured by Du Pont-Mitsui Polychemicals Co., Ltd. was used. An MFR (temperature: 190°C, load: 2.16 kg) according to ISO 1133 is 12 g/10 min.

1-6. Polybutylene terephthalate resin (T-2)

Polybutylene terephthalate "DURANEX 200FP" (product name) manufactured by Wintec Polymer Private Limited was used.

1-7. Polypropylene resin (T-3)

Polypropylene "NOVATEC FY4" (product name) manufactured by Japan Polypropylene Corporation was used. An MFR (temperature: 190°C, load: 2.16 kg) according to ISO 1133 is 5.0 g/10 min.

1-8. Additives

The following antioxidants and fillers were used as additives.

1-8-1. Phosphorus-based antioxidant (U-1)

Distearyl pentaerythritol diphosphite "ADK STAB PEP-8" (product name) manufactured by ADEKA CORPORATION was used.

1-8-2. Phosphorus-based antioxidant (U-2)

Tris (2,4-di-tert-butylphenyl) phosphite "ADK STAB 2112" (product name) manufactured by ADEKA CORPORATION was used.

1-8-3. Phenolic antioxidant (U-3)

2-[1-(2-Hydroxy-3,5-di-tert-pentylphenyl)ethyl]4, 6-di-tert-pentylphenyl acrylate "SUMILIZER GS" (product name) manufactured by Sumitomo Chemical Co., Ltd. was used.

1-84. Wollastonite (U-4)

Wollastonite "SH-800" (product name) manufactured by Kinsei Matec Co., Ltd. was used.

1-8-5. Talc (U-5)

Talc "MICRO ACE P-3 RC51" (product name) manufactured by Nippon Talc Co., Ltd. was used.

2. Evaluation method

The coating resin compositions prepared in Examples and Comparative Examples were subjected to injection molding to obtain test pieces or coated test pieces having a shape and a size according to the evaluation items. Various evaluations were then performed.

2-1. Impact resistance

Charpy impact strength was measured under the condition of a temperature of 23°C according to ISO 179.

2-2. Heat resistance

Thermal deformation temperature was measured under the condition of a load of 1.80 MPa according to ISO 75.

2-3. Molding appearance

Using an injection molding machine "$\alpha$-150" (model name) manufactured by FANUC, a plate-shaped test piece having a protrusion 2 using a gate was obtained. A resin temperature during injection molding was 260°C, a mold temperature was 50°C, and an injection speed was 80 mm/s.

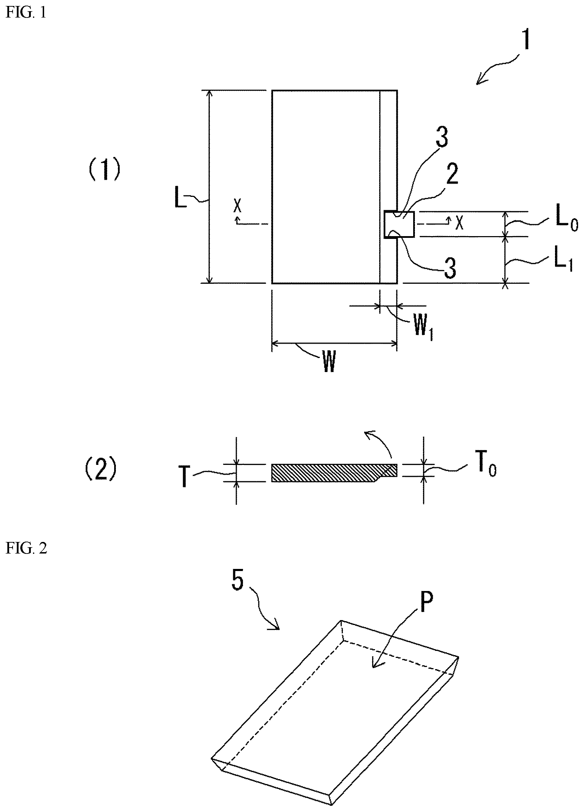

Subsequently, a notch 3 (notch length: 2 mm) was made in two places on the left and right of the protrusion 2 of the plate-shaped test piece to obtain a test piece 1 for evaluation of the molding appearance shown in Fig. 1. Dimensions in the figure are as follows. L=150 mm, W=70 mm, T=3 mm, $L_1$=45 mm, $L_0$=6 mm, $W_1$=3 mm, and $T_0$=2 mm. The protrusion 2 was then held between pliers and pulled in a direction indicated by an arrow in Fig. 1 (2), and at that time, whether or not peeling occurred on a surface of the test piece 1 was visually observed, and the molding appearance was determined based on the following evaluation criteria.

<Evaluation of molding appearance>

A: Peeling did not occur in the vicinity of the protrusion 2.
B: Peeling occurred in a part of the vicinity of the protrusion 2.
C: Peeling occurred all over the vicinity of the protrusion 2.

2-4. Coatability

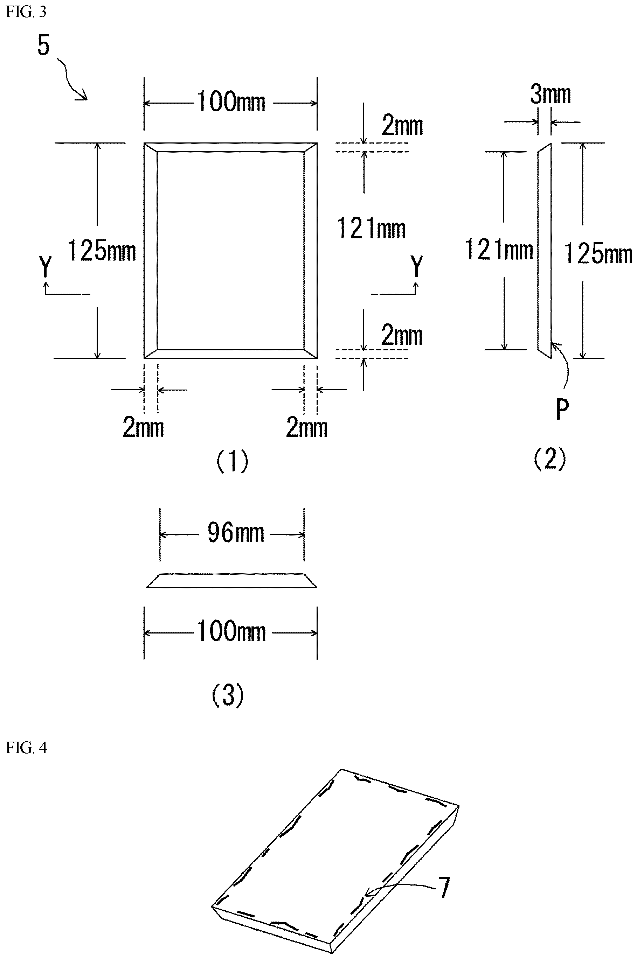

A test piece 5 shown in Figs. 2 and 3 was obtained using the injection molding machine "α-150" (model name) manufactured by FANUC. The resin temperature during injection molding was 260°C, the mold temperature was 25°C, and the injection speed was 20 mm/s. Subsequently, a test piece (coated test piece) for evaluation of coatability was prepared according to the following procedures, and the presence or absence of a coating defect such as foams or cracks indicated by symbol 7 in Fig. 4 on a surface of the test piece was visually observed, and coatability was determined based on the following criteria.

(1) State adjustment

The test piece 5 shown in Fig. 2 was left standing in a thermostatic chamber adjusted to 23°C for 12 hours or more to adjust the state.

(2) Coating

Spray coating (coating film thickness: 20 to 30 $\mu$m) of a coating material including 80 parts of an acrylic resin-based coating main agent, 85 parts of a synthetic resin coating thinner and 10 parts of a curing agent was performed on a surface denoted by reference sign P of the test piece 5 shown in Figs. 2 and 3, and the test piece 5 was left standing at a temperature of 23°C for 5 minutes.

(3) Drying

Thereafter, drying was performed at a temperature of 80°C for 30 minutes to obtain a coated test piece.

<Evaluation of coating defect (foams)>

5: Generation of foams was not confirmed at all.
4: 1 to 5 foam(s) were confirmed.
3: 6 to 10 foams were confirmed.
2: 11 to 20 foams were confirmed.
1: 21 or more foams were confirmed.

<Evaluation of coating defect (cracks)>

5: Generation of cracks was not confirmed at all.
4: Cracks having a width of less than 100 $\mu$m and a length of less than 1 cm were confirmed at one or more places only in an edge portion of the surface of the coated test piece.
3: Cracks having a width of less than 100 $\mu$m and a length of 1 cm or more were confirmed at one or more places only in the edge portion of the surface of the coated test piece.
2: Cracks having a width of 100 $\mu$m or more were confirmed at one or more places only in the edge portion of the surface of the coated test piece.
1: Cracks were confirmed at one or more places regardless of the place on the surface of the coated test piece.

<Comprehensive evaluation of coatability>

An average was calculated from the total point of the evaluation results regarding the foams and cracks observed in the coated test piece, and comprehensive evaluation was performed.

A: More than 4.0 points and 5.0 points or less.
B: More than 3.0 points and 4.0 points or less.
C: More than 2.0 points and 3.0 points or less.
D: 2.0 points or less.

3. Production and evaluation of coating resin composition (1)

Examples 1-1 to 1-9 and Comparative Examples 1-1 to 1-3

The raw materials shown in Tables 1 and 2 were mixed at a predetermined ratio with a Henschel mixer. The mixture was then supplied to a twin screw extruder "SBTN-32" (model name) manufactured by Plastics Engineering Laboratory Co., Ltd. and was melt-kneaded (cylinder set temperature: 200°C to 240°C) to obtain pellets (coating resin composition) consisting of a thermoplastic resin composition. Using the pellets, a melt mass flow rate was measured under conditions of a temperature of 220°C and a load of 98N in accordance with ISO 1133 to evaluate fluidity (molding processability). In addition, the above various evaluations were performed, and these results are also shown in Tables 1 and 2.

[Table 1]

Table 1

| | | | | Example | | | | | | | | |
|---|---|---|---|---|---|---|---|---|---|---|---|---|
| | | | | 1-1 | 1-2 | 1-3 | 1-4 | 1-5 | 1-6 | 1-7 | 1-8 | 1-9 |
| Raw material | Thermoplastic resin | P-1 | parts | 24 | 24 | 24 | 24 | 24 | 24 | 34 | 34 | 34 |
| | | P-3 | parts | 10 | 10 | 10 | 10 | 10 | 10 | | | |
| | | Q-1 | parts | 20.7 | 20.5 | 20 | 16 | 11 | 9 | 20 | 16 | 13 |
| | | Q-2 | parts | 36 | 36 | 36 | 36 | 36 | 36 | 36 | 36 | 36 |
| | | Q-4 | parts | 9 | 9 | 9 | 9 | 9 | 9 | 9 | 9 | 9 |
| | | R-1 | parts | 0.3 | 0.5 | 1 | 5 | 10 | 12 | 1 | 5 | 2 |
| | | T-1 | parts | | | | | | | | | 3 |
| | | T-2 | parts | | | | | | | | | 3 |
| | Additive | U-1 | parts | 0.1 | 0.1 | 0.1 | 0.1 | 0.1 | 0.1 | 0.1 | 0.1 | 0.1 |
| | Total | | parts | 100.1 | 100.1 | 100.1 | 100.1 | 100.1 | 100.1 | 100.1 | 100.1 | 100.1 |
| Coating resin composition | Configuration | Thermoplastic resin (X) [*1] | (A1) Rubber-reinforced vinyl-based resin in ABS resin (P-1) | % | 19.3 | 19.3 | 19.3 | 19.3 | 19.3 | 19.3 | 27.3 | 27.3 | 27.3 |
| | | | (A2) Rubber-reinforced vinyl-based resin in AES resin (P-3) | % | 4.7 | 4.7 | 4.7 | 4.7 | 4.7 | 4.7 | | | |
| | | | (B) Modified olefin resin | % | 0.3 | 0.5 | 1.0 | 5.0 | 10.0 | 12.0 | 1.0 | 5.0 | 2.0 |
| | | | (D) Aromatic vinyl-based copolymer | % | 75.7 | 75.5 | 75.0 | 71.0 | 66.0 | 64.0 | 71.7 | 67.7 | 64.7 |
| | | | Ethylene-(meth)acrylic acid ester-carbon monoxide copolymer | % | | | | | | | | | 3.0 |
| | | | PBT | % | | | | | | | | | 3.0 |
| | | Rubbery portion (a1) [*2] of rubber-reinforced vinyl-based resin | Rubbery portion contained in ABS resin | % | 83 | 83 | 83 | 83 | 83 | 83 | 100 | 100 | 100 |
| | | | Rubbery portion contained in AES resin | % | 17 | 17 | 17 | 17 | 17 | 17 | 0 | 0 | 0 |
| | | Rubbery portion contained in thermoplastic resin (X) | | % | 17.4 | 17.4 | 17.4 | 17.4 | 17.4 | 17.4 | 20.4 | 20.4 | 20.4 |
| | | Aromatic vinyl structural unit constituting aromatic vinyl-based copolymer (D) | | % | 71.1 | 71.1 | 71.0 | 70.8 | 70.4 | 70.2 | 71.5 | 71.3 | 71.0 |
| | | Cyanidated vinyl structural unit constituting aromatic vinyl-based copolymer (D) | | % | 28.9 | 28.9 | 29.0 | 29.2 | 29.6 | 29.8 | 28.5 | 28.7 | 29.0 |
| | Evaluation | Molding appearance (peeling) | | | A | A | A | A | B | B | A | A | A |
| | | Coatability | | | B | A | A | A | A | A | A | A | A |
| | | Evaluation of cracks | | | 4 | 4 | 4 | 5 | 5 | 5 | 5 | 5 | 5 |
| | | Evaluation of foams | | | 4 | 5 | 5 | 5 | 5 | 5 | 5 | 5 | 5 |
| | | Charpy impact strength | | kJ/m$^2$ | — | — | 11 | 10 | 8 | 7 | 15 | 14 | 8 |
| | | MFR (220°C) | | g/10 min. | — | — | 30 | 31 | 32 | 33 | 22 | 23 | 27 |
| | | HDT | | °C | — | — | 75 | 74 | 72 | 71 | 81 | 79 | 75 |

Both *1 and *2 are proportions when the total amount of the respective components is 100%.

[Table 2]

Table 2

| | | | | | Comparative Example | | |
|---|---|---|---|---|---|---|---|
| | | | | unit | 1-1 | 1-2 | 1-3 |
| Coating resin composition | Raw material | Thermoplastic resin | P-1 | parts | 24 | 24 | 24 |
| | | | P-3 | parts | 10 | 10 | 10 |
| | | | Q-1 | parts | 21 | 16 | 16 |
| | | | Q-2 | parts | 36 | 36 | 36 |
| | | | Q-4 | parts | 9 | 9 | 9 |
| | | | T-2 | parts | | | 5 |
| | | | T-3 | parts | | 5 | |
| | | Additive | U-1 | parts | 0.1 | 0.1 | 0.1 |
| | | Total | | parts | 100.1 | 100.1 | 100.1 |
| | Configuration | Thermoplastic resin (X) *1 | (A1) Rubber-reinforced vinyl-based resin in ABS resin (P-1) | % | 19.3 | 19.3 | 19.3 |
| | | | (A2) Rubber-reinforced vinyl-based resin in AES resin (P-3) | % | 4.7 | 4.7 | 4.7 |
| | | | (D) Aromatic vinyl-based copolymer | % | 76.0 | 71.0 | 71.0 |
| | | | PBT | % | | 5.0 | |
| | | | PP | % | | | 5.0 |
| | | Rubbery portion (a1) *2 of rubber-reinforced vinyl-based resin | Rubbery portion contained in ABS resin | % | 83 | 83 | 83 |
| | | | Rubbery portion contained in AES resin | % | 17 | 17 | 17 |
| | | Rubbery portion contained in thermoplastic resin (X) | | % | 17.4 | 17.4 | 17.4 |
| | | Aromatic vinyl structural unit constituting aromatic vinyl-based copolymer (D) | | % | 71.1 | 70.8 | 70.8 |
| | | Cyanidated vinyl structural unit constituting aromatic vinyl-based copolymer (D) | | % | 28.9 | 29.2 | 29.2 |
| | Evaluation | Molding appearance (peeling) | | | A | A | A |
| | | Coatability | | | D | D | D |
| | | Evaluation of cracks | | | 1 | 1 | 2 |
| | | Evaluation of foams | | | 1 | 2 | 2 |
| | | Charpy impact strength | | kJ/m² | – | – | – |
| | | MFR (220°C) | | g/10 min. | – | – | – |
| | | HDT | | °C | – | – | – |

Both *1 and *2 are proportions when the total amount of the respective components is 100%.

Results in Tables 1 and 2 teach the following.

Comparative Examples 1-1 to 1-3 are examples of compositions not containing the component (B) according to the present invention, and the coatability was not good. On the other hand, Examples 1-1 to 1-9 are examples of compositions having the configuration of the present invention, and coated molded products were obtained which were suppressed in defects such as peeling of the coating film and were excellent in appearance. Among them, in particular, Example 1-7 is an example of a composition in which the component (B) according to the present invention was contained in a preferred proportion, and a molded article to be coated was obtained which was excellent in impact resistance and heat resistance.

4. Production and evaluation (2) of coating resin composition

Examples 2-1 to 2-13 and Comparative Examples 2-1 to 2-3

The raw materials shown in Tables 3 and 4 were mixed at a predetermined ratio with a Henschel mixer. The mixture was then supplied to a twin screw extruder "SBTN-32" (model name) manufactured by Plastics Engineering Laboratory Co., Ltd. and was melt-kneaded (cylinder set temperature: 220°C to 260°C) to obtain pellets (coating resin composition) consisting of a thermoplastic resin composition. Using the pellets, a melt mass flow rate was measured under conditions of a temperature of 240°C and a load of 98N in accordance with ISO 1133 to evaluate fluidity (molding processability). In addition, the above various evaluations were performed, and these results are also shown in Tables 3 and 4.

[Table 3]

Table 3

| | | | | | Example | | | | | | | | | | | | |
|---|---|---|---|---|---|---|---|---|---|---|---|---|---|---|---|---|---|
| | | | | | 2-1 | 2-2 | 2-3 | 2-4 | 2-5 | 2-6 | 2-7 | 2-8 | 2-9 | 2-10 | 2-11 | 2-12 | 2-13 |
| Raw material | Thermoplastic resin | | P-2 | parts | 5.5 | 5.5 | 5.5 | 5.5 | 5.5 | 5.5 | 5.5 | 5.5 | 5.5 | 12.5 | 5.5 | 5.5 | 5.5 |
| | | | P-3 | parts | 15 | 15 | 15 | 15 | 15 | 15 | 15 | 15 | 15 | 1.5 | 15 | 15 | 15 |
| | | | Q-3 | parts | 13.5 | 12.5 | 9.5 | 6.5 | 2.5 | 6.5 | 6.5 | 6.5 | 24.5 | 1 | 6.5 | 13.5 | 13.5 |
| | | | Q-4 | parts | 3 | 3 | 3 | 3 | 3 | 3 | 3 | 3 | 3 | 3 | 3 | 3 | 3 |
| | | | R-1 | parts | 1 | 2 | 5 | 8 | 12 | 5 | 5 | 2 | 2 | 2 | 2 | 1 | 1 |
| | | | S-1 | parts | 62 | 62 | 62 | 62 | 62 | 62 | 62 | 62 | 50 | 80 | 62 | 62 | 62 |
| | | | T-1 | parts | | | | | | | 3 | 3 | | | 3 | | |
| | | | T-2 | parts | | | | | | | | | | | 3 | | |
| | | | T-3 | parts | | | | | | 3 | | 3 | | | | | |
| | Additive | | U-2 | parts | 0.2 | 0.2 | 0.2 | 0.2 | 0.2 | 0.2 | 0.2 | 0.2 | 0.2 | 0.2 | 0.2 | 0.2 | 0.2 |
| | | | U-3 | parts | 0.2 | 0.2 | 0.2 | 0.2 | 0.2 | 0.2 | 0.2 | 0.2 | 0.2 | 0.2 | 0.2 | 0.2 | 0.2 |
| | | | U-4 | parts | | | | | | | | | | | | 15 | |
| | | | U-5 | parts | | | | | | | | | | | | | 15 |
| | Total | | | parts | 100.4 | 100.4 | 100.4 | 100.4 | 100.4 | 100.4 | 100.4 | 100.4 | 100.4 | 100.4 | 100.4 | 115.4 | 115.4 |
| Coating resin composition | Configuration | Thermoplastic resin (X) [*1] | (A1) Rubber-reinforced vinyl-based resin in ABS resin (P-1) | % | 5.0 | 5.0 | 5.0 | 5.0 | 5.0 | 5.0 | 5.0 | 5.0 | 5.0 | 11.5 | 5.0 | 5.0 | 5.0 |
| | | | (A2) Rubber-reinforced vinyl-based resin in AES resin (P-3) | % | 7.0 | 7.0 | 7.0 | 7.0 | 7.0 | 7.0 | 7.0 | 7.0 | 7.0 | 0.7 | 7.0 | 7.0 | 7.0 |
| | | | (B) Modified olefin resin | % | 1.0 | 2.0 | 5.0 | 8.0 | 12.0 | 5.0 | 5.0 | 2.0 | 2.0 | 2.0 | 2.0 | 1.0 | 1.0 |
| | | | (D) Aromatic vinyl-based copolymer | % | 25.0 | 24.0 | 21.0 | 18.0 | 14.0 | 18.0 | 18.0 | 18.0 | 36.0 | 5.8 | 18.0 | 25.0 | 25.0 |
| | | | (C) Polycarbonate resin | % | 62.0 | 62.0 | 62.0 | 62.0 | 62.0 | 62.0 | 62.0 | 62.0 | 50.0 | 80.0 | 62.0 | 62.0 | 62.0 |
| | | | Ethylene-(meth)acrylic acid ester-carbon monoxide copolymer | % | | | | | | | 3.0 | 3.0 | | | 3.0 | | |
| | | | PBT | % | | | | | | | | | | | 3.0 | | |
| | | | PP | % | | | | | | 3.0 | | 3.0 | | | | | |
| | | Rubbery portion (a1) [*2] of rubber-reinforced vinyl-based resin | Rubbery portion contained in ABS resin | % | 42 | 42 | 42 | 42 | 42 | 42 | 42 | 42 | 42 | 94 | 42 | 42 | 42 |
| | | | Rubbery portion contained in AES resin | % | 58 | 58 | 58 | 58 | 58 | 58 | 58 | 58 | 58 | 6 | 58 | 58 | 58 |
| | | Rubbery portion contained in thermoplastic resin (X) | | % | 7.8 | 7.8 | 7.8 | 7.8 | 7.8 | 7.8 | 7.8 | 7.8 | 7.8 | 7.95 | 7.8 | 7.8 | 7.8 |
| | | Aromatic vinyl structural unit constituting aromatic vinyl-based copolymer (D) | | % | 67.5 | 67.5 | 67.6 | 67.6 | 67.8 | 67.6 | 67.6 | 67.6 | 67.3 | 72.2 | 67.7 | 67.5 | 67.5 |
| | | Cyanidated vinyl structural unit constituting aromatic vinyl-based copolymer (D) | | % | 32.5 | 32.5 | 32.4 | 32.4 | 32.2 | 32.4 | 32.4 | 32.4 | 32.7 | 27.8 | 32.3 | 32.5 | 32.5 |
| | Evaluation | Molding appearance (peeling) | | | A | A | A | B | B | A | A | A | A | A | A | A | A |
| | | Coatability | | | B | A | A | A | A | A | A | A | A | C | A | B | B |
| | | Evaluation of cracks | | | 4 | 5 | 5 | 5 | 5 | 5 | 5 | 5 | 5 | 3 | 5 | 4 | 4 |
| | | Evaluation of foams | | | 4 | 5 | 5 | 5 | 5 | 5 | 5 | 5 | 5 | 4 | 5 | 4 | 4 |
| | | Charpy impact strength | | kJ/m$^2$ | — | 70 | — | — | — | 63 | — | 77 | 75 | 50 | 50 | — | — |
| | | MFR (240°C) | | g/10 min | — | 27 | — | — | — | 32 | — | 24 | 20 | 16 | 16 | — | — |
| | | HDT | | °C | — | 102 | — | — | — | 101 | — | 102 | 92 | 110 | 110 | — | — |

Both *1 and *2 are proportions when the total amount of the respective components is 100%.

[Table 4]

Table 4

| | | | Unit | Comparative Example 2-1 | Comparative Example 2-2 | Comparative Example 2-3 |
|---|---|---|---|---|---|---|
| Coating resin composition | Raw material | Thermoplastic resin — P-2 | parts | 5.5 | 5.5 | 5.5 |
| | | P-3 | parts | 15 | 15 | 15 |
| | | Q-3 | parts | 14.5 | 9.5 | 9.5 |
| | | Q-4 | parts | 3 | 3 | 3 |
| | | S-1 | parts | 62 | 62 | 62 |
| | | T-2 | parts | | | 5 |
| | | T-3 | parts | | 5 | |
| | | Additive — U-2 | parts | 0.2 | 0.2 | 0.2 |
| | | U-3 | parts | 0.2 | 0.2 | 0.2 |
| | | Total | parts | 100.4 | 100.4 | 100.4 |
| | Configuration | Thermoplastic resin (X) *1 — Rubber-reinforced vinyl-based resin in ABS resin (P-2) | % | 5.0 | 5.0 | 5.0 |
| | | Rubber-reinforced vinyl-based resin in AES resin (P-3) | % | 7.0 | 7.0 | 7.0 |
| | | (D) Aromatic vinyl-based copolymer | % | 26.0 | 21.0 | 21.0 |
| | | (C) Polycarbonate resin | % | 62.0 | 62.0 | 62.0 |
| | | PBT | % | | | 5.0 |
| | | PP | % | | 5.0 | |
| | | Rubbery portion (a1) *2 of rubber-reinforced vinyl-based resin — Rubbery portion contained in ABS resin | % | 42 | 42 | 42 |
| | | Rubbery portion contained in AES resin | % | 58 | 58 | 58 |
| | | Rubbery portion contained in thermoplastic resin (X) | % | 7.8 | 7.8 | 7.8 |
| | | Aromatic vinyl structural unit constituting aromatic vinyl-based copolymer (D) | % | 67.4 | 67.6 | 67.6 |
| | | Cyanidated vinyl structural unit constituting aromatic vinyl-based copolymer (D) | % | 32.6 | 32.4 | 32.4 |
| | Evaluation | Molding appearance (peeling) | | A | A | A |
| | | Coatability | | D | D | D |
| | | Evaluation of cracks | | 1 | 1 | 2 |
| | | Evaluation of foams | | 1 | 1 | 2 |
| | | Charpy impact strength | kJ/m² | — | 54 | — |
| | | MFR (240°C) | g/10 min | — | 28 | — |
| | | HDT | °C | — | 103 | — |

Both *1 and *2 are proportions when the total amount of the respective components is 100%.

Results in Tables 3 and 4 teach the following.

Comparative Examples 2-1 to 2-3 are examples of compositions not containing the component (B) according to the present invention, and the coatability was not good. On the other hand, Examples 2-1 to 2-13 are examples of compositions having the configuration of the present invention, and coated molded products were obtained which were suppressed in defects such as peeling of the coating film and were excellent in appearance. Among them, in particular, Example 2-8 is an example of a composition in which the component (B) according to the present invention was contained in a preferred proportion, and a molded article to be coated was obtained which was excellent in impact resistance and heat resistance.

INDUSTRIAL APPLICABILITY

The molded article obtained from the coating resin composition of the present invention is suitable for applications requiring impact resistance, heat resistance, molding appearance, coatability, and the like, for example, glazing such as a vehicle window member; vehicle exterior parts such as a hood, a pillar, a trunk lid, a canopy, a spoiler, and a trim; vehicle interior parts such as a cup holder, a bezel of in-vehicle equipment, and an instrument panel; housings and parts of electrical and electronic equipment such as a (mobile) phone, a smartphone, a PDA, a (mobile) DVD player, a (mobile) personal computer, a (mobile) game machine, a (mobile) touch panel, and a camera; OA-related parts such as a printer and a copier; lighting equipment parts; building material parts such as a sign, a display plate, a window frame, a sash, and a decorative plate; a pachinko machine; toys such as a figure or a plastic model; interior parts or exterior parts of an industrial or industrial robot; interior parts or exterior parts of vehicles (airplanes, ships, etc) which are required to have a good appearance by coating decoration; and the like.

REFERENCE SIGNS LIST

1:     Test piece for evaluation of molding appearance
2:     Protrusion
3:     Notch
5:     Test piece for evaluation of coatability
7:     Crack
P:     Coated surface

**Claims**

1.  A coating resin composition comprising a thermoplastic resin, the thermoplastic resin comprising: (A) a rubber-reinforced vinyl-based resin having a rubbery portion derived from a rubbery polymer and a resin portion having a structural unit derived from an aromatic vinyl compound; and (B) an olefin-based resin modified with a polar functional group containing an oxygen atom.

2.  The coating resin composition according to claim 1, wherein a content ratio of the component (B) is in a range from 0.1% to 15% by mass based on 100% by mass of a total amount of the thermoplastic resin.

3.  The coating resin composition according to claim 1 or 2, wherein the polar functional group contained in the component (B) is an acid anhydride group.

4.  The coating resin composition according to any one of claims 1 to 3, wherein the rubbery polymer used in formation of the component (A) comprises a diene-based rubbery polymer.

5.  The coating resin composition according to any one of claims 1 to 4, wherein the thermoplastic resin further comprises an aromatic vinyl-based copolymer (provided that the component (A) is excluded), the aromatic vinyl-based copolymer having a structural unit derived from an aromatic vinyl compound.

6.  The coating resin composition according to any one of claims 1 to 5, wherein the thermoplastic resin further comprises a polycarbonate resin.

7.  A molded article comprising the coating resin composition according to any one of claims 1 to 6.

8.  The molded article according to claim 7, wherein the molded article includes automotive parts.

FIG. 1

(1)

(2)

FIG. 2

FIG. 3

5

100mm

2mm

3mm

Y

125mm

121mm

2mm

121mm

125mm

2mm

2mm

P

(1)

(2)

96mm

100mm

(3)

FIG. 4

7

<table>
<tr><td colspan="2">**INTERNATIONAL SEARCH REPORT**</td><td>International application No.</td></tr>
<tr><td colspan="2"></td><td>PCT/JP2020/031889</td></tr>
</table>

A. CLASSIFICATION OF SUBJECT MATTER
C09D 109/06(2006.01)i; C09D 123/26(2006.01)i; C09D 125/02(2006.01)i; C09D 169/00(2006.01)i
FI: C09D109/06; C09D123/26; C09D125/02; C09D169/00
According to International Patent Classification (IPC) or to both national classification and IPC

B. FIELDS SEARCHED

Minimum documentation searched (classification system followed by classification symbols)
C09D1/00-201/10

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2015/068385 A1 (MITSUI CHEMICALS, INC.) 14 May 2015 (2015-05-14) paragraphs [0140], [0211], [0223], [0233]-[0237], table 4, examples 3-4 | 1-3, 7-8<br>4-6 |
| X<br>A | JP 2016-538370 A (DOW GLOBAL TECHNOLOGIES LLC) 08 December 2016 (2016-12-08) claims 1-2, 11, paragraphs [0114], [0117]-[0125], tables 7-8, example 2 | 1, 3-4, 7-8<br>2, 5-6 |
| A | JP 11-172189 A (NISSHIN STEEL CO., LTD.) 29 June 1999 (1999-06-29) claims, paragraph [0020], example 1 | 1-8 |
| A | CN 105968970 A (NANGTONG HAODI ANTICORROSION EQUIPMENT CO., LTD.) 28 September 2016 (2016-09-28) claim 1, paragraph [0025], example 3 | 1-8 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 October 2020 (15.10.2020) | 02 November 2020 (02.11.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

| International application No. |
|---|
| PCT/JP2020/031889 |

| Patent Documents referred in the Report | Publication Date | Patent Family | Publication Date |
|---|---|---|---|
| WO 2015/068385 A1 | 14 May 2015 | US 2016/0280828 A1 paragraphs [0205], [0319], [0357]- [0380], table 4, examples 3-4 EP 3067372 A1 KR 10-2016-0067919 A TW 201522386 A | |
| JP 2016-538370 A | 08 Dec. 2016 | US 2016/0257836 A1 claims 1-2, 11, paragraphs [0126], [0130]-[0134], tables 7-8 EP 3066167 A1 TW 201522530 A KR 10-2016-0083882 A CN 105683312 A MX 2016005267 A WO 2015/066899 A1 | |
| JP 11-172189 A | 29 Jun. 1999 | (Family: none) | |
| CN 105968970 A | 28 Sep. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003327779 A
- JP 2007327011 A
- JP 011256366 A
- JP 2014184720 A
- JP 01919238 A